# EUROPÄISCHE PATENTSCHRIFT

(11) **EP 1 586 621 B1**
(45) Veröffentlichungstag und Bekanntmachung des Hinweises auf die Patenterteilung: **27.02.2013**
(21) Anmeldenummer: 05006694.3
(22) Anmeldetag: 26.03.2005
(51) Int. Cl.: C10J 3/66

(54) **Verfahren zur Vergasung von kohlenstoffhaltigen Einsatzstoffen zu Synthesegas**
Process for gasifying carbonaceous matter into syngas
Procédé de gazéification de matière carbonée en gaz de synthèse

(30) Priorität: 16.04.2004 DE 102004019203
(43) Veröffentlichungstag der Anmeldung: 19.10.2005
(73) Patentinhaber: Karlsruher Institut für Technologie, 76131 Karlsruhe (DE)
(72) Erfinder: Henrich, Edmund, Dr., 76076 Dettenheim (DE); Raffelt, Klaus, 76131 Karlsruhe (DE)

(56) Entgegenhaltungen:
- WO-A-01/68789
- DE-A1- 10 151 054
- DE-A1- 19 925 316
- GB-A- 2 109 400

## Beschreibung

Die Erfindung betrifft ein Verfahren zur Vergasung von kohlenstoffhaltigen Einsatzstoffen, insbesondere Biomasse zu Synthesegas gemäß des ersten Patentanspruchs. Das Verfahren ist wesentlicher Bestandteil einer Verfahrenskette zur Erzeugung von synthetischen Treibstoffen und chemischen Grundstoffen aus Biomasse und auch anderen kohlenstoffhaltigen Einsatzstoffen allgemein.

Biomasse (Abfallstoffe pflanzlicher oder tierischer Herkunft wie Tierfette, Tiermehle, Restöle, aber auch Altöle etc.) konkurriert mit anderen kohlenstoffhaltigen Einsatzstoffen wie Erdöl, Erdgas und Kohle als Energieträger in der Energiewirtschaft und gleichzeitig als Kohlenstoff-Rohstoff für die Chemie. Sie ist im Gegensatz zu den drei genannten Alternativen eine regenerative Energiequelle, was sie im Hinblick auf die zukünftige Energieversorgung zunehmend interessant macht. Biomasse umfasst grundsätzlich alle holz- und krautartigen kohlenstoffhaltigen regenerativen Stoffe wie beispielsweise Holz, Stroh, Exkremente, aber auch organische brennbare Abfällen.

Für die Handhabung der eingangs genannten Energieträger ist es von Vorteil, wenn sie möglichst in fluider, d.h. in flüssiger oder gasförmiger Form vorliegen. Folglich gibt es eine Reihe von Ansätzen, die feste, umständlich zu handhabende und inhomogene Biomasse in solche Modifikationen zu konvertieren.

In der DE 101 51 054 A1 wird beispielhaft ein Verfahren zur Behandlung von Biomasse beschrieben. Dabei wird die Biomasse einer Schnellpyrolyse bei 400 bis 600 °C unterworfen, wobei sich Bioöl (40 bis 80 Gew.%) und Biokoks (10 bis 30 Gew.%) bilden. Durch ein Vermischen dieses Bioöls und Pyrolysekoks entsteht eine Mischung, d. h. ein sog. Slurry (Ölschlamm), welcher anschließend in einem in Überdruck (mindestens 25 bar bei vorzugsweise 1200 bis 1800 °C) gehaltenen Flugstrom-Druckvergaser in Rohsynthesegas überführt wird. Hierbei wird das Bioöl und der Pyrolysekoks mit reinem Sauerstoff in unterstöchiometrischem Verhältnis umgesetzt.

Das genannte Verfahren weist jedoch einige entscheidende Nachteile auf, welche die Anwendung erschweren, erheblich einschränken oder besondere Vorkehrungen erforderlich machen.

Vor allem ist das Zwischenprodukt, der Ölschlamm (Slurry) in der genannten Zusammensetzung häufig nicht stabil und lagerfähig, d.h. es ist nach einer mehr oder weniger langen Lager- oder Transportzeit mit einer Entmischung zu rechnen. Einerseits setzt sich der Pyrolysekoksanteil im Slurry ab andererseits entmischt sich der Bioölanteil, wobei sich eine wässrige und eine organische Phase bilden. Die wässrige Phase kann mehr oder weniger große Mengen wasserlöslicher organischer Verbindungen enthalten, insbesondere Essigsäure, Alkohole und andere Kohlenwasserstoffe mit Sauerstoff oder weiteren Heteroatomen.

Gefährlich wird insbesondere ein lokal erhöhter wässriger Anteil im Ölschlamm, d. h. überwiegend wässrige Phase mit nur geringen Anteilen an organischer Phase und Pyrolysekoks, bei der Vergasung unter Sauerstoff in einem Flugstrom-Druckvergaser. Weist die wässrige Phase nämlich aufgrund einer stattgefundenen Entmischung einen niedrigen Brennwert auf, d.h. sie enthält kaum brennbare Verbindungen in gelöster oder dispergierter Form, stellt sich im Flugstrom-Druckvergaser ein Sauerstoffüberschuss ein, der in Folge einer Vermischung mit zuvor erzeugtem Synthesegas (Biogas) zu einer Explosion führen kann. Sofern keine Maßnahmen, welche eine Entmischung behindern, eingeleitet wurden, sollte der Ölschlamm unverzüglich weiterverarbeitet werden.

Die genannten Gefahren und Einschränkungen erschweren bislang eine Biomassennutzung im großen Stil. Besonders schränken die vorgenannten Entmischungen den Transport des Zwischenprodukts, dem Ölschlamm (Slurry) von einer dezentralen Pyrolyse möglichst direkt beim Erzeuger der Biomasse zu einem zentralen Flugstrom-Druckvergaser zur Erzeugung von Biogas stark ein. Zudem lassen sich Slurrys aus saisonal anfallenden Abfällen aus der Land- und Forstwirtschaft als Zwischenprodukt nur begrenzte Zeit in einem Tank lagern.

Auch stellen die möglicherweise dem Slurry kurz vor der Vergasung hinzu zumischende Bio- oder Pyrolysekondensate im Flugstrom-Druckvergaser ein aus vorgenannten Gründen gravierendes Sicherheitsproblem dar. Da auch das hinzu zumischende zusätzliche Bioöl oder Pyrolysekondensat in einem Tank teilweise auch über größere Zeiträume bevorratet werden muss, besteht auch hier die Gefahr, dass aus dem Tank zeitweise ausschließlich die wässrige Phase des Bioöls entnommen wird. Die Gefahr besteht insbesondere dann, wenn der Tankinhalt nicht kontinuierlich und nicht ausreichend effizient durchmischt werden kann.

Hinzu kommt, dass die Zusammensetzungen der organischen und der wässrigen Phase je nach Art der Lagerung bei ein und demselben Bioöl unterschiedlich sein können, etwa weil sich niedrig siedende Bestandteile verflüchtigt haben.

Davon ausgehend liegt der Erfindung die Aufgabe zugrunde, ein Verfahren zur Vergasung von lagerungsstabilen Biomasse ohne die vorgenannten Nachteile und Einschränkungen anzugeben.

Die Aufgabe wird durch ein Verfahren mit den Merkmalen von Anspruch 1 gelöst. Bevorzugte Ausgestaltungen des Verfahrens geben die Unteransprüche wieder.

Der Grundgedanke des Verfahrens liegt in der Verwendung eines offenporigen Pyrolysekoks in der Mischung, welcher in der Lage ist, bei einer Einmischung in das Pyrolysekondensat oder in das Bioöl dieses in seinen Poren nahezu vollständig aufzunehmen. Bevorzugt weist der Pyrolysekoks dabei eine offene Porosität von oberhalb 50%, vorzugsweise über 60% oder gar 75% auf, sodass bei der Einmischung eine Mischung von pastöser oder gar feucht-krümeliger Konsistenz und mit einem sehr hohen Flüssigphasenanteil oberhalb 50, 60 bzw. bis 75% entsteht. Die flüssigen Bestandteile werden praktisch komplett und langzeitstabil in der offenen Porosität des Pyrolysekoks gelagert, wobei die zusammenhängenden Volumina der einzelnen Poren die flüssigen Bestandteile in Teilvolumina partitionieren.

Eine derartige Einmischung ist grundsätzlich dann abgeschlossen, wenn die Porosität keine weitere flüssige Phase mehr aufnimmt. Insofern kann die Sedimentationsdichte in der Mischung auch erst nach einer gewissen Zeit eingestellt oder überschritten werden. Dies lässt sich aber beispielsweise durch eine leichte Anhebung Mischungstemperatur (z.B. auf 40°C) wie auch durch eine Größenbegrenzung der Pyrolysekokspartikel (z.B. auf 300 µm) gewährleisten. Auch Dispergierungsmittel (z.B. Tenside) können als weitere Option hierfür zur Anwendung kommen.

Eine feucht-krümelige Konsistenz entsteht dann, wenn die flüssige Phase vollständig in den Poren eingelagert ist nur eine gewisse Restfeuchtigkeit auf den Partikeloberflächen des Pyrolysekoks zurückbleibt. Durch diese Restfeuchtigkeit kann es zu einer Agglomeration von einzelnen Teilchen kommen. Feucht-krümelige Partikel sind gegenüber dem trockenen Zustand schwerer, weisen auch deswegen eine höhere Schüttdichte (bezogen auf das spezifische Volumen und auf die Dichte) und neigen beim vorliegenden Einsatzzweck in besonders vorteilhafter Weise nicht mehr zur Staubbildung.

Bei pastöse Konsistenzen einer Mischung ist mehr flüssige Phase vorhanden, als durch die Porosität der Pyrolysekokspartikel aufgenommen werden kann. Im Gegensatz zu einem Schlamm, z.B.

Ölschlamm, verhält sich eine pastöse Mischung nicht sedimentativ, d. h. sie ist sedimentationsstabil. Es bleiben die Pyrolysekokspartikel gegenseitig im Kontakt und bilden eine Matrix, während die nicht in der Porosität gebundene flüssige Phase durch die Kapillar- und Adhäsionswirkung zwischen den Partikeln gebunden wird. Pyrolysekoks ist in Mischungen mit pastösen Konsistenzen in der Sedimentationsdichte oder darüber eingemischt. Insofern ist bei Mischungen mit pastöser Konsistenz anders wie beispielsweise bei Schlämmen in positiver Weise nicht mit einer Entmischung oder Verflüchtigung der flüssigen Phase zu rechnen.

Eine Mischung mit dem zuvor beschriebenen hohen im Feststoffanteil fest eingebundenen flüssigen Phaseanteil hat mehrere Vorteile. Zum einen verhindert die vorgenannte Einbindung der flüssigen Phase in die Poren ein Auslaufen dieser, andererseits können Sedimentationen des Feststoffanteils in minimal verbleibenden nicht eingebundenen flüssigen Phasenanteil auch bei länger andauernder Lagerung praktisch ausgeschlossen werden.

Eine weitere positive Wirkung ist durch die vorgenannte Partitionierung der flüssigen Phasenanteile gewährleistet, welche die Entmischung dieser auf die jeweiligen Teilvolumina beschränkt und ein Aufkonzentration größerer Mengen von wässrigen Bestandteilen in der Mischung praktisch unmöglich macht und somit die eingangs beschriebene Explosionsgefahr bei einer Vergasung im Flugstrom-Druckvergaser wirksam unterbindet.

Die vorgenannte in pastöser oder krümeliger Form vorliegende Mischung kann beispielsweise nach einer Lagerung oder einem Transport erneut verflüssigt werden, indem die festen Bestandteile (Pyrolysekokspartikel) beispielsweise durch einen vorzugsweise nassen Mahlprozess, beispielsweise in einer Kolloidmühle, zerkleinert werden, wodurch ein Teil der Porosität zerstört wird und die darin eingelagerten flüssigen Phasenteile nicht mehr als eingebundene Phasenanteile in der Mischung vorliegen. Mit zunehmender Zerkleinerung wird also eine zunehmende Menge der flüssigen Phasenanteile für eine zunehmende Verflüssigung der Mischung (abnehmende Viskosität) freigesetzt; die Mischung wird so zu einem zunehmend pumpfähigen Ölschlamm. Dieser Prozess der Verflüssigung kann mit einer Einmischung von zusätzlichen Pyrolysekondensaten, wässrigen Lösungen und/oder Wasser in die Mischung oder durch ein moderates Aufheizen je nach Zusammensetzung und Viskosität auf ein Temperaturniveau zwischen 50 bis 250°C unter Druck unterstützt werden. Der Zeitraum zwischen Zerkleinerung und Einleitung der Mischung in den Flugstrom-Druckvergaser sollte zur Vermeidung von Entmischungsvorgängen 200 Sekunden, vorzugsweise 20 Sekunden nicht überschreiten. Dabei lässt sich auch die zeitabhängig reduzierte Viskosität durch thixotropes Verhalten ausnutzen.

Offenporigen Pyrolysekoks mit dem vorgenannten Eigenschaftsprofil erhält man durch eine Schnellpyrolyse von kohlenstoffhaltigen Einsatzstoffen wie Biomasse. Wesentlich dabei ist, dass sich bei der Pyrolyse eine statistische Nahordnung ausbildet, d.h. eine Kohlenstoffmatrix ohne regelmäßige Geometrie. Dies kann vor allem durch die Art der Biomasse und durch die Reaktionsbedingungen beeinflusst werden. Mineralische Biomassebestandteile stören in jedem Fall das Kohlenstoffgerüst und führen zu Fehlordnungen. Zusätzlich werden sie im Koks angereichert, da sowohl Pyrolysekondensat als auch Pyrolysegas annähernd mineralstofffrei sind. Hohe Konzentrationen von anorganischen Bestandteilen findet man generell bei schnell wachsenden Biomassen. Dazu gehören halmartige Gewächse, wie Getreide, aber auch Baumrinde, Stroh (vorzugsweise mit maximalen Durchmesser von 500 µm) oder grün geschnittene Einjahrespflanzen wie Raps. Der zweite wesentliche Einflussfaktor ist die Reaktionsgeschwindigkeit: Je schneller die Pyrolyse, desto mehr Fehlordnungen weist der Koks auf. Kurze Pyrolysezeiten werden dadurch gewährleistet, dass die Biomasse durch 500 °C heißen Sand zur Pyrolyse gebracht wird. Liegt die Temperatur im Sand deutlich niedriger, beispielsweise bei nur 300 °C, würde ebenfalls eine Pyrolysereaktion stattfinden. Da die Geschwindigkeit einer Pyrolyse mit der Temperatur sinkt, kann sich bei der vorgenannten vergleichsweise geringen Temperatur auch in Sand eine Nahordnung ausbilden (Beispiel: Holzkohleproduktion). Würde man die Biomasse mit 500 °C heißen Verbrennungsgasen anstatt mit Sand aufheizen, würde die Pyrolyse ebenfalls langsamer ablaufen, da der entsprechende Wärmeübergang schlechter ist. Der Wärmeübergang zwischen heißem Sand und dem Biomassepartikel findet an der Berührungsfläche beider Feststoffe statt. Diese wird maximiert, indem eine feinkörnige Sandfraktion verwendet wird und das Sand / Biomasse - Gemisch z.B. mechanisch verwirbelt wird.

Mit dem vorgeschlagenen Verfahren lassen sich folgende vor allem sicherheits- und kostenrelevante Vorteile realisieren und der Transfer in einen Flugstrom-Druckvergaser vereinfachen:
1. Die hochporösen Pyrolysekokse sind pyrophor und beim Transport an Luft empfindlich gegen Selbstentzündung. (VCI Lagerklasse 4.2: selbstentzündliche Stoffe). Mit der vorgenannten Mischung in pastöser oder krümeliger Form lassen sich Pyrolysekokse sicher lagern und transportieren.
2. Im Bereich der Sedimentationsdichte und darüber ist eine sedimentationsstabile Lagerung von noch einfach förderbaren Mischungen auch ohne Stabilisator möglich.
3. Hochpastöse (stichfeste) Mischungen können auch nach dem sicheren Transport zu einer Zentralanlage auf eine einfacher zu pumpende und zerstäubende Feststoffkonzentration verdünnt werden.
4. Bei Tankleckagen oder anderen Unfällen können derartige Mischungen nicht oder nur schwer (Grenze zwischen pastös und schlammförmig) auslaufen, sich verteilen und im Boden versickern. Dadurch wird die Ausbreitung der Kontamination insbesondere von Böden durch toxische Stoffe verhindert und der weitaus größte Teil der Mischung kann wieder geborgen werden. Auch die Verdampfungsrate von brennbaren und flüchtigen toxischen Bestandteilen wird auf diese Weise drastisch reduziert. Dadurch wird eine Brand- und Explosionsgefahr deutlich vermindert.
5. Eine Reduktion der Viskosität der Mischung zum besseren Fördern und Zerstäuben durch Aufwärmen erfolgt unmittelbar, d.h. erst kurz vor der Vergasung durch die vorgenannte Zerkleinerung. Dadurch werden thermisch induzierte Veränderungen der Mischung während Lagerung und Transport vermieden. Die Abfallwärme aus dem Mahlprozess (Zerkleinerung) lässt sich so nützlich verwerten. Eine Viskositätsreduktion kann auch durch leichtes Verdünnen mit geeigneten flüssigen organischen Abfällen erreicht werden, für deren Entsorgung eine Gutschrift erfolgt.

Die Erfindung wird anhand von Ausführungsbeispielen, welche sich auf den Gesamtprozess oder bestimmte Verfahrensschritte davon beziehen, näher erläutert.

### Beispiel 1:

Sedimentationsdichte definiert den Punkt, bei der die Feststoffkonzentration einer Suspension so hoch ist, dass sich die Feststoffpartikel in einer Mischung nicht aufgrund des Erdgravitationsfeldes nach unten absetzen. Die Sedimentationsdichte ist abhängig von Porosität, wahrer Dichte und Partikelgrößenverteilung des Feststoffes, sowie Dichte und Viskosität der Flüssigkeit. Bei Mischungen aus Pyrolysekondensat wie Bioöl und Koksstäuben (Pyrolysekoks) liegt die Sedimentationsdichte zwischen 20 und 35 Gew.-% Feststoffanteil.

Beispielhaft wurden die Sedimentationsdichten von vier verschiedenen Pyrolysekoksen gemessen, indem der Feststoffgehalt im untenliegenden Bodenbereich der Mischung nach halbjährlicher Lagerung bestimmt wurde (vgl. folgende Tabelle):

| | x₁₀ | x₅₀ | x₉₀ | Sedimentationsdichte |
|---|---|---|---|---|
| 1.Mahlung | 2 µm | 6.8 µm | 17.6 µm | 32.5 Gew.-% |
| 2.Mahlung | 1.7 µm | 9 µm | 36 µm | 31 Gew.-% |
| 3.Mahlung | 3.5 µm | 16.2 µm | 95 µm | 30 Gew.-% |
| Strohkoks | 18.4 µm | 77.4 µm | 146 µm | 20 Gew.-% |

Die Partikel wurden der Größe nach sortiert. 10 % der Partikel waren kleiner als der angegebene x₁₀-Wert, 50 % der Partikel kleiner als der x₅₀-Wert und 90 % kleiner als x₉₀-Wert. Diese Werte wurden gewählt, um mit Hilfe der x₁₀-Werte und der x₉₀-Werte den Beginn und das Ende der Partikelverteilung zu definieren und zu erfassen. Der x₅₀-Wert ist ein Maß für die mittlere Partikelgröße. Als Größenmaß diente die zweidimensionale Projektion der Partikel (statistische Auswertung einer optischen Mikroskopaufnahme). Wegen der besseren Anschaulichkeit wurde nicht die Partikelfläche, sondern der Äquivalentkreisdurchmesser angegeben.

Die Porosität ist eine wesentliche Größe für die Sedimentationsdichte, weil Flüssigkeit in das Porenvolumen eindringt, ohne zur Fließfähigkeit der Mischung beizutragen. Empirisch hatte sich gezeigt, dass der Anteil der größeren Poren (>2 µm) die Fließfähigkeit wesentlich beeinflusst, während der Einfluss der kleineren Poren (<2 µm) statistisch nicht nachweisbar war.

Bei der Synthese (Schnellpyrolyse) von Strohkoks als Pyrolysekoks stellte sich eine Porosität zwischen 60 - 90 % ein, wobei die Makroporosität >2 µm allein 50-80 % ausmachte. Die Werte änderten sich bei der Synthese von Buchenholzkoks auf 50 - 75 % Porosität (Makroporosität >2 µm davon 10-60 %).

### Beispiel 2:

Zur Herstellung von 4 - 4,6 t einer Mischung aus Pyrolyseteer (Pyrolysekondensat) und Pyrolysekoks wurden Kokspartikel mit einer Kugelmühle in einem kontinuierlichen Mahlvorgang auf folgendes Partikelspektrum gemahlen: x₁₀=1,5 µm bis 4 µm, x₅₀=6 µm bis 30 µm, x₉₀=15 µm bis 120 µm. (Das Korngrößenspektrum bestimmt wesentlich die mechanischen Eigenschaften der Mischung mit, während der Kohlenstoffkonversionsgrad bei der Flugstromvergasung bei > 1000 °C unabhängig von der Korngröße >99 % war). 3,2 t Pyrolyseteer wurden in einem Tank mit Rührwerk vorgelegt und auf 40 - 60 °C temperiert. Durch das natürliche Gefälle lief der Teer zunächst in ein 1 m³ großes Rührgefäß und wurde dann in den Tank zurück gepumpt. Mittels einer Zellradschleuse auf dem Rührgefäß wurde Koks zu dem gerührten Teer gegeben. Bei der Dosierung war darauf zu achten, dass eine homogene Mischung in den Tank zurück gepumpt wurde. Um eine fertige Mischung für einen Vergasungsversuch oder eine Probenahme zu entnehmen wurde ein T-Ventil hinter der Pumpe umgestellt.

Es wurden 1400 kg Pyrolysekoks eingemischt, wobei sich ein Feststoffgehalt von 30,4 % einstellte. Kriterium für den maximal vorgesehen Feststoffgehalt war hierbei die freie Fließbarkeit durch die Rohr- und Schlauchleitungen der Anmischstation. Vorteilhaft ist also eine Dosierungsregelung über die Viskosität der Mischung im Rührgefäß oder in der Rohrleitung zwischen Rührgefäß und gerührtem Tank.

### Beispiel 3:

In der gleichen Vorrichtung wie in Beispiel 2 wurden 3,2 t Pyrolyseessig (Pyrolysekondensat) auf 20 - 30 °C temperiert. Der Pyrolysekoks hat die gleiche Körnung wie in Beispiel 2. Unter Erhalt der freien Fließbarkeit werden maximal 2,2 t Pyrolysekoks hinzugemischt (40,7 % Feststoffgehalt in der Mischung). Die geringere Viskosität und geringere Dichte des Pyrolyseessigs verglichen mit Pyrolyseteer machen eine höhere Rühr- und Pumpleistung im Tankbehälter notwendig, um Sedimentation während der Verarbeitung zu vermeiden.

### Beispiel 4:

In einem Rührbehälter mit einem Rührer, der für hochviskose Materialien geeignet ist (z.B. Kolloidmischer), wurden 3 1 Pyrolyseteer eingefüllt. Anschließend wurde Pyrolysekoks mit der in Beispiel 2 angegebenen Körnung bis zu einem Feststoffgehalt von 45 % zugegeben. Beim Mischen erwärmt sich der Slurry je nach Mischdauer auf bis zu 90 °C. Kriterium für den Feststoffgehalt war in diesem Fall, dass die Mischung in heißem Zustand noch pumpbar, jedoch in kaltem Zustand nicht frei fließbar ist, dabei aber noch eine zusammenklebende dicke Paste oberhalb der Sedimentationsdichte) bildet. Diese Mischung erwies sich als besonders sicher zu transportieren, da bei Leckagen die Kapillar- und Adhäsionskräfte zwischen Koks und Teer ein Auslaufen des Teeres verhindern.

Im Labor wurden 50 g der o.g. Mischung mit 45 % Feststoffgehalt hergestellt und auf mehrere Lagen saugfähiges Filterpapier gegeben. Die Mischung war nicht fließfähig. Auch nach 15 Stunden waren nur 1,4 % des Rohteers in das Filterpapier eingedrungen, davon allein zwei Drittel in die oberste Lage des Filterpapiers. Ein nachträgliches Verdünnen der Mischung, um die Fließfähigkeit wieder herzustellen und die Verarbeitung in einer Vergasungsanlage zu erleichtern, war mit einem geeigneten Rührsystem einfach zu erreichen.

### Beispiel 5:

In einem inerten Rührbehälter mit einem schnell drehenden Rührer, der für Aufwirbelungen von Stäuben geeignet ist, wurde unter Luft-, bzw. Sauerstoffausschluss Pyrolysekokspulver mit einem Korngrößenspektrum entsprechend des Beispiels 2 eingefüllt. Während des Rührvorganges wurde dieses Pyrolysekokspulver aufgewirbelt. Dabei wurde über einen Zerstäuber Flüssigkeit eingedüst, bis zu einer Zusammensetzung von ca. 30 % Flüssigkeit und ca. 70 % Feststoff. Diese Flüssigkeit kann sowohl durch Pyrolyseteer oder Pyrolyseessig gebildet sein, aber auch eine zu entsorgende Abfallflüssigkeit wie Black Liquor der Zellstoffindustrie, wässrige Lösungen oder Wasser. Der gewünschte Feststoffgehalt ergab sich über die Forderung, den Koks vollständig zu benetzen, damit er nicht mehr staubte, aber noch körnig und leicht förderbar war (ähnlich eines körnigen Schüttguts). Bei diesem geringen Flüssigkeitsgehalt waren die Poren der Koksoberfläche gefüllt und die Reaktivität gegenüber Luftsauerstoff deutlich reduziert. Die Kokspartikel mit einem Korngrößenspektrum entsprechend dem Beispiel 2 klebten zusammen und bilden Agglomerate mit einem Durchmesser im Millimeterbereich (bis ca. 3 mm). Der Flüssigkeitsgehalt in der Mischung reichte allerdings nicht aus, um diese Körner zu einem Schlamm zu verbinden.

Eine solche Mischung mit sehr hohem Feststoffgehalt bot sicherheitstechnisch die gleichen Vorteile wie eine unter Beispiel 2 beschriebene hochviskose Mischung. Gleichzeitig bietet sie den Vorteil, dass sie genauso einfach zu lagern, transportieren und verarbeiten ist, wie ein körniges Schüttgut. Vor Ort in einer Vergasungsanlage kann sie bei Bedarf ohne Probleme zu einem Schlamm mit niedrigerem Feststoffgehalt und normalen Flüssigkeitseigenschaften vermischt werden.

### Beispiel 6:

In einem inerten Rührbehälter mit einem schnelldrehenden Rührer, der für Aufwirbelungen von Stäuben geeignet ist, wurde unter Luft-, bzw. Sauerstoffausschluss Kokspulver mit einem Korngrößenspektrum entsprechend dem Beispiel 2 vorgelegt. Während das Kokspulver aufgewirbelt wurde, gab man über einen Zerstäuber Pyrolyseteer hinzu (bis zu einer Zusammensetzung von max. 30 % Flüssigkeit und min. 70 % Feststoff). Kriterium für den Feststoffgehalt war, dass der Koks vollständig benetzt wurde und nicht mehr staubte, aber dennoch sehr feinkörnig war (z.B. Durchmesser ca. 0,5 mm). Danach wird genau so viel Pyrolyseessig hinzugefügt, dass die Mischung eine ausreichende Förderbarkeit hat. Vorteil dieser Mischung ist, dass er je nach Feststoffgehalt eine Binghamsche Rheologie aufweist: Ähnlich wie Ketchup ist die Mischung in Ruhe nicht fließfähig und hat daher gute Sicherheitseigenschaften. Wird sie bewegt, verhielt sie sich aber niedrigviskos und ließ sich im Flugstrom-Druckvergaser leicht pumpen und zerstäuben.

### Beispiel 7

Die Ausgangsstoffe für die Pyrolyseprodukte (Pyrolysekoks und Pyrolysekondensat) bestanden aus kontaminierten Biomassen, z.B. schwermetallhaltigem Industrieholz oder Stroh aus belasteten Landwirtschaftsflächen. Gleichsam eignete sich auch kunststoffbeschichtete, d. h. nicht kompostierbare Biomasse (z.B. sogar mit PVC). Aus diesen Materialien wurden Pyrolyseprodukte hergestellt und daraus wiederum die vorgenannten Mischungen gemäß der Beispiele 2 bis 6, die im Flugstrom zu Synthesegas umgesetzt wurden.

Vorhandene Schwermetalle wurden in der Schlacke des Flugstromvergasers gebunden und verglast (z.B. Chrom und andere Schwermetalle), bzw. bei der Prozesswasserreinigung entfernt (z.B. Cadmium). Die Schlacke ermöglichte eine sehr komprimierte und daher preiswerte Deponierung der Schwermetallabfälle (Schüttdichte 1200 ± 200 kg/m³, grobkörnige Partikel < 1 cm).

Je nach Eluatverhalten und Grenzwerten konnte sogar auf eine Behandlung als gefährlicher Reststoff verzichtet werden. Bei einer Chlorbelastung der Biomasse wurden keine chlorierten Furane oder Dioxinen gebildet (bzw. nur an der Grenze der Nachweisbarkeit), da die Pyrolyse unterhalb der für die de-novo-Synthese notwendigen Temperatur abläuft, die Gaserzeugung wesentlich darüber.

### Beispiel 8:

Das Anmischen von flüssigen Slurries (Beispiel 2 und 3) wurde mit der Mahlung der Pyrolysekokspartikel kombiniert. Anmischen und Mahlen konnte gleichzeitig geschehen, z.B. in einer mit Pyrolyseflüssigkeit (Teer oder Essig) gefüllten Kugelmühle, oder hintereinander, z.B. durch Druckzerkleinerung in einer Presse oder in Walzen gefolgt vom Zusammenrühren (Einmischen). In einer diskontinuierlich arbeitenden Trommelmühle (Mahlraumabmessungen 305 mm x 305 mm, 20 mm und 45 mm Mahlkörper, Verhältnis Mahlkörper / Mahlgut = 10 / 1) wurde Strohkoks und Buchenholzkoks trocken und als Teermaische aufgemahlen. In der folgenden Tabelle ist die benötigte Mahldauer angegeben, um einen Siebdurchsatz von 80 % bei der angegebnen Maschenweite zu erreichen:

| Mahlung | | Maschenweite 50 µm | Maschenweite 100 µm |
|---|---|---|---|
| trocken | Buchenholzkohle | 15 min | 8.5 min |
| trocken | Strohkoks | 22 min | 11 min |
| Nass | Buchenholzkohle | 21 min | 7 min |
| Nass | Strohkoks | 15 min | 7 min |

In einem Laborversuch wurde der Pressdruck für die Zerkleinerung von Strohkoks und Buchenholzkoks bis zu 562 MPa variiert. Je größer der Druck desto größer die (Makro-) Porositätserniedrigung des Kokses. Nach Anwendung eines hohen Drucks bei der Zerkleinerung kann man höhere Feststoffgehalte bei gleichzeitiger Fließbarkeit erhalten als nach Anwendung eines niedrigen Drucks. Dies wird an den Messergebnissen der beiden folgenden Tabellen deutlich:

| Strohkoks, Druckbehandlung | 28 MPa | 562 MPa |
|---|---|---|
| Gesamtporosität | 89 % | 82 % |
| Makroporosität (>2 µm) | 74 % | 58 % |
| Viskosität (20 % Feststoff, 20 °C) | > 10 Pas | 5 Pas |

| Buchenkoks, Druckbehandlung | 28 MPa | 562 MPa |
|---|---|---|
| Gesamtporosität | 73 % | 64 % |
| Makroporosität (>2 µm) | 59 % | 33 % |
| Viskosität (20 % Feststoff, 20 °C) | 1.8 Pas | 0.6 Pas |

## Patentansprüche

1. Verfahren zur Vergasung von kohlenstoffhaltigen Einsatzstoffen zu Synthesegas, umfassend die folgenden Verfahrensschritte:
a) Schnellpyrolyse der kohlenstoffhaltigen Einsatzstoffe unter Bildung von Pyrolysekondensat und porösen Pyrolysekokspartikeln,
b) Einmischen der Pyrolysekokspartikel in das Pyrolysekondensat zu einer Mischung,
c) Einleitung der Mischung in einen auf einem Überdruck gehaltenen Flugstrom-Druckvergaser sowie
d) Umsetzung der Mischung zu Synthesegas unter einer Sauerstoffatmosphäre im Flugstrom-Druckvergaser,
**dadurch gekennzeichnet, dass**
e) die Pyrolysekokspartikel eine offene Porosität oberhalb von 50% aufweisen,
f) die Einmischung so lange erfolgt, bis in der Mischung die Sedimentationsdichte erreicht oder überschritten ist sowie
g) eine Zerkleinerung der Pyrolysekokspartikel in der Mischung kurz vor der Einleitung in den Flugstrom-Druckvergaser stattfindet.

2. Verfahren nach Anspruch 1, **dadurch gekennzeichnet, dass** die Zerkleinerung maximal 200 Sekunden vor der Einleitung in den Flugstrom-Druckvergaser erfolgt.

3. Verfahren nach Anspruch 1 oder 2, **dadurch gekennzeichnet, dass** die kohlenstoffhaltigen Einssatzstoffe Biomasse umfassen und das Pyrolysekondensat sowohl organische als auch wässrige Phasenanteile enthält.

4. Verfahren nach einem der vorgenannten Ansprüche, **dadurch gekennzeichnet, dass** die Zerkleinerung einen Nassmahlprozess in einer Kolloidmühle umfasst.

5. Verfahren nach einem der vorgenannten Ansprüche, **dadurch gekennzeichnet, dass** die Mischung vor der Umsetzung auf eine Temperatur zwischen 50 und 250°C aufgeheizt wird.

6. Verfahren nach einem der vorgenannten Ansprüche, **dadurch gekennzeichnet, dass** die Einmischung bei einer Temperatur oberhalb 40°C erfolgt und die Pyrolysekokspartikel dabei eine Partikelgröße von maximal 300 µm aufweisen.

7. Verfahren nach einem der vorgenannten Ansprüche, **dadurch gekennzeichnet, dass** die Mischung vor Eintritt in den Flugstrom-Druckvergaser mit zusätzlichem Pyrolysekondensat, wässrigen Lösungen oder Wasser vermischt wird.

## Claims

1. Process for gasifying carbonaceous matter into syngas, comprising the following process steps:
a) rapid pyrolysis of the carbonaceous matter to produce pyrolysis condensate and porous pyrolysis coke particles,
b) adding the pyrolysis coke particles to the pyrolysis condensate to form a mixture,
c) introducing the mixture into a pressurized entrained bed gasifier held at positive pressure and
d) converting the mixture to syngas in an oxygen atmosphere in the pressurized entrained bed gasifier,
**characterised in that**
e) the pyrolysis coke particles have an open porosity above 50%,
f) the adding continues until sedimentation density is reached or exceeded in the mixture and
g) a comminution of the pyrolysis coke particles in the mixture takes place shortly before introduction into the pressurized entrained bed gasifier.

2. Process according to claim 1, **characterised in that** the comminution takes place a maximum of 200 seconds before introduction into the pressurized entrained bed gasifier.

3. Process according to claim 1 or 2, **characterised in that** the carbonaceous feed comprises biomasses and the pyrolysis condensate contains both organic and aqueous phase fractions.

4. Process according to one of the preceding claims, **characterised in that** the comminution comprises a wet milling process in a colloid mill.

5. Process according to one of the preceding claims, **characterised in that** the mixture, prior to conversion, is heated to a temperature between 50 and 250°C.

6. Process according to one of the preceding claims, **characterised in that** the adding occurs at a temperature above 40°C and the pyrolysis coke particles thereby have a particle size of a maximum of 300 µm.

7. Process according to one of the preceding claims, **characterised in that** the mixture, prior to entry into the pressurized entrained bed gasifier, is mixed with additional pyrolysis condensate, aqueous solutions or water.

## Revendications

1. Procédé de gazéification de charges contenant du carbone pour obtenir du gaz de synthèse comprenant les étapes suivantes :
a) pyrolyse rapide des charges contenant du carbone avec formation d'un condensat de pyrolyse et de particules de coke de pyrolyse poreuses,
b) introduction et mélange des particules de coke de pyrolyse dans le condensat de pyrolyse pour obtenir un mélange,
c) introduction de ce mélange dans un gazéificateur pneumatique à flux entrainé maintenu sous surpression, et
d) transformation du mélange en gaz de synthèse sous atmosphère d'oxygène dans le gazéificateur pneumatique à flux entrainé,
**caractérisé en ce que**
e) les particules de coke de pyrolyse présentent une porosité ouverture supérieure à 50 %,
f) l'introduction et le mélange sont effectués jusqu'à avoir atteint ou dépassé une densité de sédimentation dans le mélange, et
g) un broyage des particules de coke de pyrolyse est effectué dans le mélange peu avant son introduction dans le gazéificateur pneumatique à flux entrainé.

2. Procédé conforme à la revendication 1,
**caractérisé en ce que**
le broyage est effectué au maximum de 200 secondes avant l'introduction dans le gazéificateur pneumatique à flux entrainé.

3. Procédé conforme à la revendication 1 ou 2,
**caractérisé en ce que**
les charges renfermant du carbone comprennent de la biomasse et le condensat de pyrolyse renferme une fraction de phase organique ainsi qu'une fraction de phase aqueuse.

4. Procédé conforme à l'une des revendications précédentes,
**caractérisé en ce que**
le broyage comporte un processus de broyage humide dans un compresseur de colloïdes.

5. Procédé conforme à l'une des revendications précédentes,
**caractérisé en ce qu'**
avant la réaction, le mélange est chauffé à une température comprise entre 50 et 250°C.

6. Procédé conforme à l'une des revendications précédentes,
**caractérisé en ce que**
l'introduction et le mélange sont effectués à une température supérieure à 40°C et les particules de coke de pyrolyse présentent une granulométrie maximum de 300 µm.

7. Procédé conforme à l'une des revendications précédentes,
**caractérisé en ce qu'**
avant son entrée dans le gazéificateur pneumatique à flux entrainé, le mélange est mélangé avec du condensat de pyrolyse complémentaire, des solutions aqueuses ou de l'eau.
